# EUROPEAN PATENT SPECIFICATION

(11) **EP 0 310 628 B1**
(45) Date of publication and mention of the grant of the patent: **07.04.1993**
(21) Application number: 87904459.2
(22) Date of filing: 18.06.1987
(51) Int. Cl.: G02C 1/04, G02C 5/18, G02C 5/14, G02C 5/12

(54) **EYEGLASS FRAME INCLUDING SHAPE-MEMORY ELEMENTS**
BRILLENGESTELL MIT FORMGEDÄCHTNIS-ELEMENTEN
MONTURE DE LUNETTES COMPRENANT DES ELEMENTS A MEMOIRE DE FORME

(30) Priority: 19.06.1986 US 876077
(43) Date of publication of application: 12.04.1989
(73) Proprietor: MARCHON EYEWEAR, Inc., Melville, NY 11747 (US)
(72) Inventor: ZIDER, Robert, B., Portola Valley, CA 94025 (US); KRUMME, John, F., Woodside, CA 94062 (US)
(74) Representative: DIEHL GLAESER HILTL & PARTNER
(86) International application number: PCT/US87/01483
(87) International publication number: WO 87/07961

(56) References cited:
- WO-A-85/02688
- FR-A- 2 466 341
- FR-A- 2 502 349
- JP-A- 5 689 717
- JP-A-58 179 819
- JP-U-59 136 619
- US-A- 4 533 411
- PATENT ABSTRACTS OF JAPAN, vol. 6, no. 209 (P-150)[1087], 21st October 1982; & JP-A-57 115 517
- PATENT ABSTRACTS OF JAPAN, vol. 8, no. 23 (P-251)[1460], 31st January 1984; & JP-A-58 179 819

## Description

The metals which have historically been used to make metal eyeglass frames have usually been chosen in large part for their ease of fabrication. Metals such as nickel-silver, monel, and phosphor bronze have fairly high yield strength but quite low work-hardening, which allows them to accept large deformations during manufacture. In use, however, they tend to bend rather suddenly and in quite localized sections if their yield strength is exceeded. Such sharp bends are very difficult to remove without leaving "kinks" in the bent section. The higher strength frame materials, such as high strength stainless steels and beryllium-copper, are able to withstand much higher elastic strains without permanent deformation. They are still limited to only about 1% elastic strain, however, and if their yield strength is exceeded a bend is formed which is difficult to remove.

A number of references such as U.S. Patent No. 4,472,035, Japanese Patent Publication No. 57-115517(A) and Japanese Patent JP-084714 have suggested the use of shape-memory alloys, especially the nickel-titanium alloys, for use as frame components due to their "superelastic" or "pseudoelastic" properties. Although these terms are often mistakenly used interchangeably, they refer to two distinctly different properties of the alloys. A definition of pseudoelasticity is given in document US-A-4,533,411 (Column 3). Careful study of all of these references, specifically U.S. Patent No. 4,472,035 shows that the elastic property cited is the "pseudoelastic" property of shape-memory alloys. This pseudoelasticity occurs in a limited temperature range slightly above the stress-free austenite to martensite transformation temperature. It involves the creation of stress-induced martensite which simultaneously undergoes strain as it forms to relieve the applied stress. As soon as the applied stress is removed, the thermally unstable martensite reverts to austenite, and the strain spontaneously returns to zero. This behavior gives a very high apparent elasticity to the material without inducing any permanent strain, but is narrowly limited in the temperature range where it can be utilized in a given alloy. Because the pseudoelasticity depends upon behavior within a narrow portion of the transformation temperature spectrum, lowering the temperature as little as 10°C may change tee behavior to normal shape-memory. In this case a deformed component will remain deformed unless it is heated. Also, the yield strength of this alloy, if it is annealed to give good pseudoelastic properties, is too low at low temperatures to function as a satisfactory component. Conversely, if the pseudoelastic component is heated by as little as 10°C, the amount of pseudoelastic strain is significantly reduced. At even higher temperatures the pseudoelasticity is eliminated because the stress needed to stress induce the martensite exceeds the yield strength of the austenite, and permanent deformation results. Thus, the effective useful temperature range for purely pseudoelastic components may be as little as 20°C. This range is too narrow to be of service to eyeglass frames which must function in winter days as cold as -20°C and in hot sunny days with possible temperatures over 40°C.

JP-A-56-89717 shows use of a shape memory nickel-titanium alloy which has a low Young's modulus and which is intended to be used at any portion of an eyeglass frame which holds the lenses like the rim and specifically a thin wire which can be used to hold the lens in the frame. From the stress strain behaviour of this material, it is evident that this material is a work-hardened martensite i.e. a superelastic shape memory alloy.

Thus, while both the elastic properties and memory properties of shape-memory alloys have been discussed as potentially useful in eyeglass frames, it is clear that previous workers have not fully understood the limitations on the use of these materials, nor have they revealed any information on the proper thermo-mechanical processing necessary to utilize the alloys as frame components.

It is the purpose of the instant invention to provide eyeglass frames which are highly resistant to permanent deformation, or "kinking", This object is solved by an eyeglass frame having at least a portion thereof fabricated from a nickel-titanium based shape-memory alloy which is in the work-hardened pseudoelastic metallurgical state, having been subjected to at least about 30% work-hardening, so as to be elastic to strains of at least 3% over a temperature range for eyeglass frame usage from -20°C to +40°C.

Preferably the pseudoelastic temperature range of said alloy matches the upper portion of the usage temperature range. Advantageously said portion is fabricated from a nickel-titanium based shape-memory alloy which has been subjected to at least 40% work-hardening.

According to a preferred embodiment said frame includes a pair of temples, said portion comprising said temples.

According to another preferred embodiment said frame includes a bridge, said portion comprising said bridge.

According to a still further preferred embodiment said eyeglass frame includes a pair of lens rims and a pair of nose pads, each nose pad connected to a respective rim by a nose pad wire, said portions comprising said nose pad wires.

To accomplish the above purpose there are provided frames having portions thereof fabricated from work hardened pseudoelastic shape-memory alloys which have the combination of super-elastic and pseudoelastic properties, hereinafter referred to as "optimized elasticity" properties.
Figure 1 is a perspective view of a generic eyeglass frame including detail with respect to one embodiment of the invention.
Figure 2A is a graph of strain versus temperature at a fixed applied stress. The temperatures which characterize the transformation between the austenite and martensite phases of a shape-memory alloy are defined on the graph.
Figures 2B-2E represent the stress-strain behavior of a fully annealed Shape-memory alloy at four different temperatures wherein:

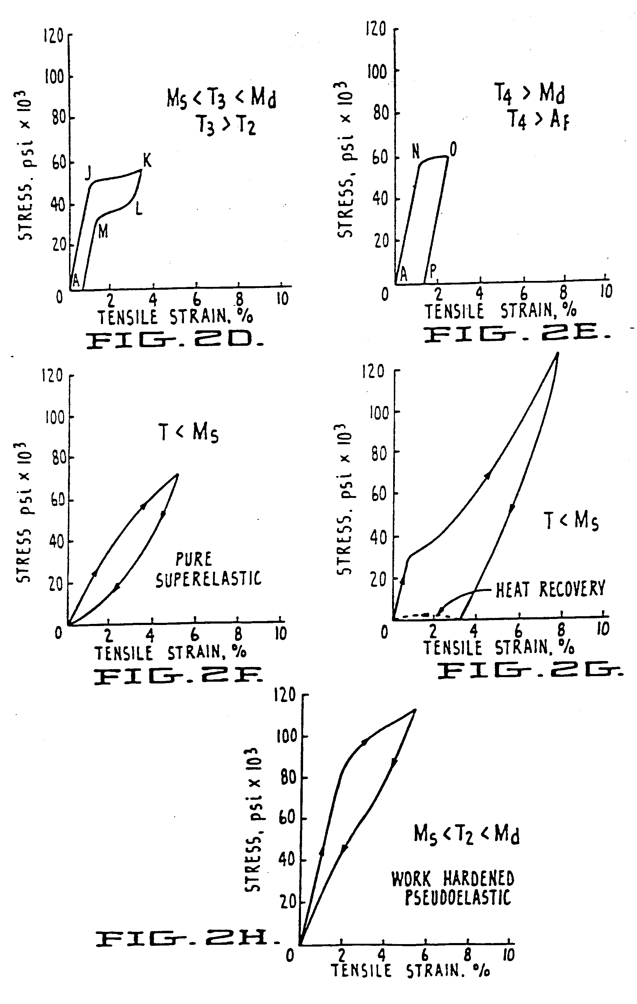

Figure 2B - the temperature T₁ is below Mₛ;
Figure 2C - the temperature T₂ lies slightly above Mₛ and well below M_{d};
Figure 2D - the temperature T₃ is higher than T₂ but still below M_{d};
Figure 2E - the temperature T₄ is greater than A_{f} and greater than M_{d};
Figure 2F represents the stress-strain behavior of a martensite alloy at T<Mₛ, such as shown in Figure 2B, which alloy has been work-hardened. This is the behavior defined as superelastic;
Figure 2G shows a combination of elastic and shape-memory properties at T<Mₛ for an alloy, such as shown in Figure 2B, which has been work-hardened and partially annealed; and
Figure 2H shows the stress-strain behavior of a martensite alloy at Mₛ<T<M_{d}, such as shown in Figure 2C, which alloy has been work-hardened. This behavior is defined as "optimized elasticity".

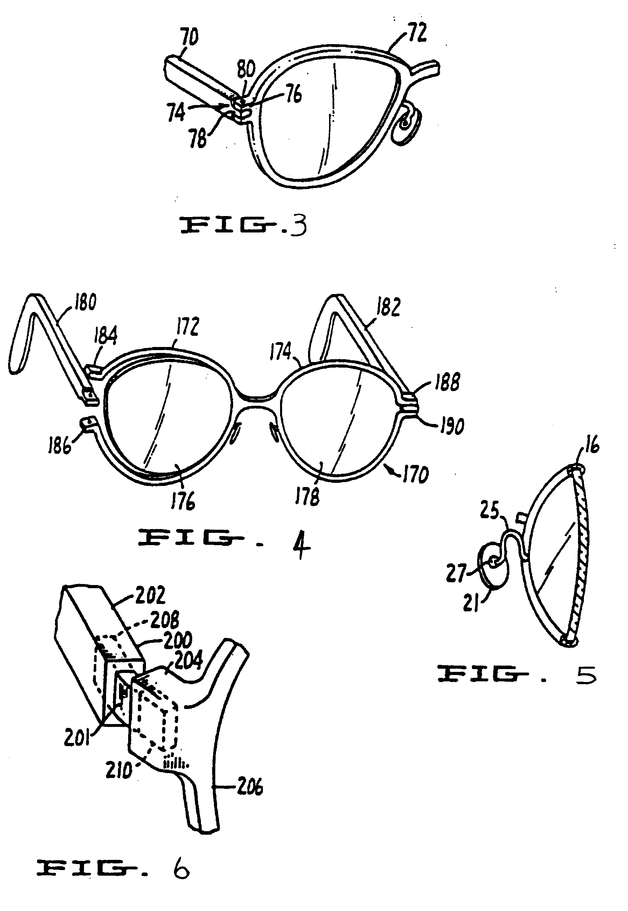

Figure 3 is a partial cross-sectional view of an eyeglass frame temple pivotally coupled to a rim by a fastener portion.
Figure 4 is a perspective view of a shape-memory alloy rim which both engages a lens and a temple.
Figure 5 is a partial perspective view of a support for a nose pad for use in the present invention.
Figure 6 is a partial perspective view of a one-piece hinge in accordance with the present invention.

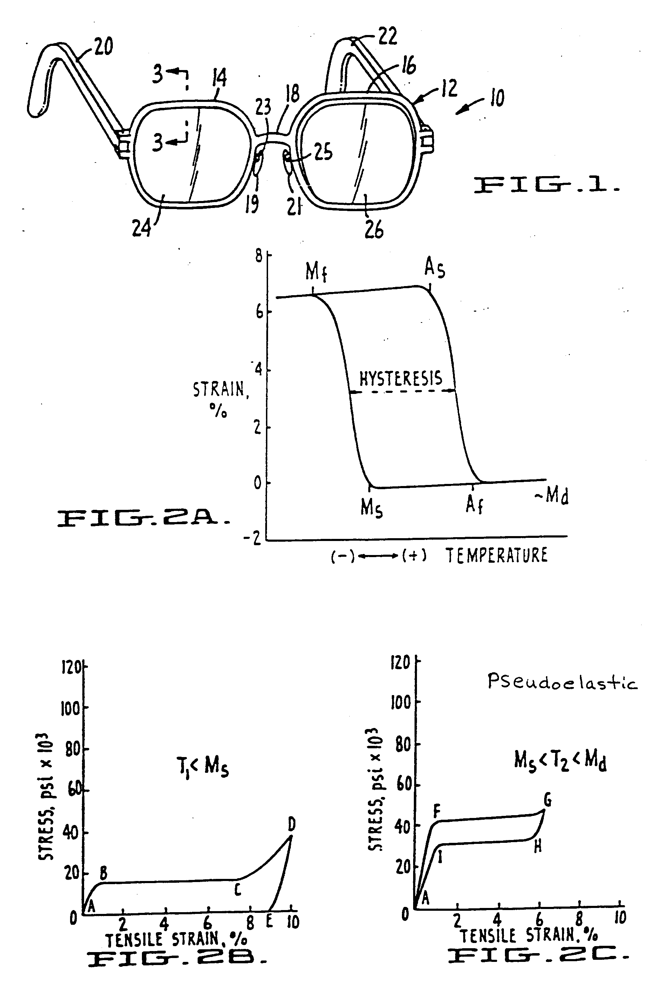

Referring to Figure 1, eyeglasses shown generally at 10 are shown having a frame 12. The frame 12 includes two eyeglass rims 14 and 16, a nose bridge 18, nose pads 19 and 21, and temples 20 and 22 which are hinged to the rims 14 and 16, respectively. The temples 20 and 22 extend back over the ears of the wearer (not shown), the bridge 18 joins the two lenses, and the nose pads, which rest on the nose of the wearer, are attached to the rims by wires 23 and 25.

Figures 2A through 2F represent stress-strain graphs of a typical shape-memory alloy under different conditions. The temperature T is the temperature at which the stress-strain tests are conducted and is generally also within the temperature range in which the alloy is to be used.

The mechanical properties of shape-memory alloys are very dependent upon processing and temperature, particularly in the temperature range near the transformation temperatures depicted in Figure 2A.

To characterize the mechanical properties of frame components, the uniaxial tensile properties will be cited because they are the most easily tested and compared to other materials or other results. To test the frame components in question, the straight blade of the temples with uniform cross-section were pulled in a standard testing machine while strain was measured using an extensometer fastened to the actual test section under study and the load was measured by the testing machine.

In Figure 2A the strain Ë that the alloy undergoes when subjected to a fixed stress U is plotted as a function of temperature. Md is the maximum temperature at which martensite formation can occur even under stress. Upon cooling, there is a sudden increase in strain when the alloy reaches the martensite start transformation temperature, Mₛ, at which temperature the high temperature structure austenite microstructure begins to transform into the much softer low temperature martensite microstructure. The increase in strain continues until the alloy is completely converted into martensite at the martensite finish temperature, M_{f}. When the alloy is reheated the transformation back to austenite begins at the austenite start temperature, Aₛ, and is completed at the austenite finish temperature, A_{f}. Generally, Aₛ is somewhat higher than M_{f}, and the curve of the temperature difference between the cooling and heating is called hysteresis. The width of the hysteresis can be 10°C to 100°C in nickel titanium alloys and even wider in some copper-based alloys.

It has been found, however, that when the alloy is subjected to work-hardening of at least about 30%, preferably at least about 40%, plastic deformation, a different set of stress-strain curves is obtained, and specific components of an eyeglass frame can be made utilizing an alloy having an appropriate temperature range (T), plus such work-hardening to achieve desired properties. For example, substantial work-hardening of a shape-memory alloy (that is, about 30% or more plastic deformation) results in a highly springy "pure superelastic" behavior at T<Mₛ, as shown in Figure 2F. This figure should be contrasted with Figure 23 which shows the same alloy without work-hardening. At Mₛ<T₂<M_{d} the same alloy will behave as shown in Figure 2H where it is described as "work-hardened pseudoelastic." Figures 2F and 2H represent the ideal characteristics for use in purely elastic eyeglass components, e.g., temples, bridges, and nose pad support wires. Whereas the pseudoelastic behavior in Figure 2C is too limited in temperature range to be useful, the behavior in Figure 2F or Figure 2H can be achieved throughout the range -20°C to -40°C by selecting an alloy with an appropriate Mₛ temperature and processing the alloy to achieve optimum work-hardening. Should the alloy be exposed to temperatures above Mₛ, the work-hardened pseudoelastic behavior of the alloy, as shown in Figure 2H, ensures that it retains the desired elasticity and strength.

By carefully work-hardening the frame material to the appropriate level and then retaining this work-hardening after all other processing by not performing any anneals, it is possible to obtain an extremely "springy" component whose yield strength is acceptably high at all relevant temperatures. At temperatures below the material's Mₛ temperature, the work-hardened structure will not undergo easy heat-recoverable strain as shown in Figure 2B, but rather exhibits the behavior shown in Figure 2F. If the service temperature should fall between Mₛ and M_{d} for the alloy, the extreme springiness due to the pseudoelastic effect is partially retained while the resistance to permanent deformation of either the martensite or austenite phases due to the work-hardening is utilized (Figure 2H). In all of these situations, the low effective modulus of the material and the enhanced yield strength due to the correct retained work-hardening make possible components with an elasticity many times that of standard frame materials.

To achieve the desired very high elasticity property throughout the temperature range for eyeglass frame usage (i.e., about -20°C to +40°C), it is desirable to combine aspects of both pseudoelasticity and superelasticity in the components. (See Figures 2C and 2F.) This is achieved by choosing an alloy whose pseudoelastic temperature range matches the upper portion of the desired service temperature range (i.e., from about 10°C to 40°C) and applying work-hardening to achieve satisfactory superelastic behavior in the lower portion of the service temperature range. By applying work-hardening of at least about 30% to the component, plastic and heat-recoverable strains in the martensite phase, up to a stress of at least 517 MPa (75 ksi) suppressed. In the pseudoelastic temperature region, the properties then become a combination of superelastic and pseudoelastic, i.e., "optimized elasticity" properties (see Figure 2H) up to stresses of at least 517 MPa (75 ksi). Thus, throughout the region of interest for eyeglass frames, the component acts completely elastically up to strains of 6% or more. This is many times the range achieved with traditional metal frame materials.

For example, a suitable component can be made using a shape-memory alloy having a transformation temperature of 0°C. Swaging a temple section to 1.52 mm (0.060") diameter, annealing the section at 600°C for 15 minutes, and then pressing that section to a flattened section of 0.92 mm (0.036") x 2.11 mm (0.083") (plastic deformation of greater than 45%) will impart sufficient cold work. Said component will support a stress of over 1.033 MPa (150 ksi) at 4% tensile strain and show complete elastic spring back at room temperature. It is understood that alternate ways of imparting equivalent amounts of cold work, such as by an additional swaging step, or by rolling or pressing to other shapes, will result in similar strength and elasticity properties.

From the above, it can be seen that an eyeglass frame may be constructed with portions thereof exhibiting optimized elasticity, said portions being made from pseudoelastic shape-memory alloy hardened at least about 30%, preferably at about 40%, and having greater than 6% elasticity over a temperature range from -20°C to -40°C.

In components which utilize the flexible fatigue resistant properties of the shape-memory alloys, such as in Figure 6, the preferred material could be of the form described in Figure 2B. The transformation temperature of the alloy should be above the service temperature range to ensure that the component is always martensite in service and therefore has a low martensite yield strength and large, reversible martensite strain. It is also possible, if the component desirably has a higher effective stiffness, to use according to the invention, the alloy in the form described in Figure 2H.

The above-described shape-memory alloys are applied but not limited to portions of the eyeglass frame, as follows:
- Optimized elasticity: temples
wires
bridge
One alloy of the type that may be used to fabricate the above portions of the eyeglass frame is the subject of U.S. Patent No. 3,351,463, which is incorporated herein by reference. Other literature describing the processing and characteristics of suitable compositions includes an article by Dr. William J. Buehler, the principal developer of 55 nitinol, and William B. Cross entitled "55-Nitinol --Unique Wire Alloy with a Memory," which appeared in the June 1969 issue of Wire Journal. A description of the materials and certain of the properties may also be found in the brochure entitled "Nitinol Characterization Studies" dated September 1969. This document, identified as N-69-36367, or NASA CR-1433, is available from the Clearinghouse for Scientific and Technical Information, Springfield, VA 22151. All of these publications are incorporated herein by reference.

Examples of shape-memory alloys are disclosed in U.S. Patents Nos. 3,174,851 and 3,672,879, incorporated herein by reference. A titanium-nickel-cobalt alloy is disclosed in U.S. Patent No. 3,558,369. Suitable binary nickel-titanium shape-memory alloys are well-known to those skilled in the art and, for example, are described in the patents and article of Buehler et al. mentioned above.

In Figure 1, the rim 14 is shown in a contracted shape (recovered state) wherein the rim 14 abuts a lens 24 and forms a tight fit therewith.

The rims 14 and 16 are made of shape-memory alloy material such as, but not limited to, a nickel-titanium alloy, various aluminum brasses, copper alloys and other known alloys that exhibit shape-memory effect. One well-known nickel-titanium alloy is known as nitinol.

Referring now to Figure 3, the fastening of an eyeglass frame temple 70 to an eyeglass frame rim 72 with a fastener portion, shown generally at 74, is detailed. The fastener portion 74 comprises a shape-memory alloy member 76 having a U-shaped cross-section which extends from the rim 72.

Figure 4 shows an eyeglass frame generally at 170 having shape-memory rims 172 and 174.

Further in regard to Figure 4, it is noted that the temples 180 and 182 may be made from shape-memory alloy when coupled to the rims 172 and 174 with a hinged joint as shown.

Alternatively, the joint may comprise a thin section of shape-memory alloy such as nitinol which has good flexibility and fatigue properties. That is, instead of using a multi-piece hinge, pivotal coupling may be achieved by using a foldable length of shape-memory alloy 201 disposed between each rim 172, 174 and temples 186, 182, respectively, as illustrated in Figure 7. Piece 201 is made of shape-memory alloy with an austenite transformation temperature above ambient temperature wherein below said austenite transformation temperature (i.e., ambient temperatures to which the eyeglasses are exposed in use) the alloy is in its martensite state and is therefore highly flexible and resistant to fatigue.

Turning now to Figure 5, nose rest 21 is shown coupled to a rim 16 by a nose pad wire 25 which is connected to rim 16. Nose pad 21 may be tightly coupled to nose pad wire 25 by a conventional shape-memory alloy fastener 27.

Referring more specifically to Figure 6, there is illustrated a hinge for the temple frame connection. In this modification, both the end 200 of the temples 202 and an extension 204 from frame 206 have deep recesses 208 and 210, respectively, to accommodate piece 201. The hinge piece 201 could also be riveted to the frame and temple. The temples may also advantageously employ shape-memory alloy as previously described.

## Claims

1. Eyeglass frame having at least a portion thereof fabricated from a nickel-titanium based shape-memory alloy which is in the work-hardened pseudoelastic metallurgical state, having been subjected to at least about 30% work-hardening, so as to be elastic to strains of at least 3% over a temperature range for eyeglass frame usage from -20°C to +40°C.

2. The eyeglass frame of claim 1, wherein the pseudoelastic temperature range of said alloy matches the upper portion of the usage temperature range.

3. The eyeglass frame of claim 2, wherein said portion is fabricated from a nickel-titanium based shape-memory alloy which has been subjected to at least 40% work-hardening.

4. An eyeglass frame as in any one of the preceding claims, wherein said frame includes a pair of temples, said portion comprising said temples.

5. An eyeglass frame as in any one of the preceding claims, wherein said frame includes a bridge, said portion comprising said bridge.

6. An eyeglass frame as in any one of the preceding claims, wherein said eyeglass frame includes a pair of lens rims and a pair of nose pads, each nose pad connected to a respective rim by a nose pad wire, said portions comprising said nose pad wires.

## Patentansprüche

1. Brillengestell, wovon zumindest ein Teil aus einer Legierung mit Formgedächtnis auf Nickel-Titan-Grundlage gefertigt ist, die sich in einem kaltverfestigten, pseudoelastischen metallurgischen Zustand befindet nach der Durchführung einer Kaltverfestigung von mindestens etwa 30%, so daß es sich gegen Verformungen von mindestens 3% über einen Temperaturbereich der Brillengestellbenutzung von -20⁰ C bis +40⁰ C elastisch verhält.

2. Brillengestell nach Anspruch 1, bei dem der pseudoelastische Temperaturbereich der besagten Legierung mit dem oberen Teil des Benutzungstemperaturbereiches übereinstimmt.

3. Brillengestell nach Anspruch 2, bei dem der besagte Teil aus einer Legierung mit Formgedächtnis auf Nickel-Titan-Grundlage gefertigt ist, die einer Kaltverfestigung von mindestens 40% unterzogen wurde.

4. Brillengestell nach einem der vorhergehenden Ansprüche, bei dem das Gestell ein Paar Bügel enthält und der besagte Teil diese Bügel umfaßt.

5. Brillengestell nach einem der vorhergehenden Ansprücche, bei dem das Gestell einen Nasensteg aufweist und der besagte Teil diesen Nasensteg umfaßt.

6. Brillengestell nach einem der vorhergehenden Ansprüche, bei dem das Brillengestell ein Paar von Linsenrahmen und ein Paar von Nasenpolstern aufweist und jedes Nasenpolster mittels eines Nasenpolsterdrahtes mit dem betreffenden Rahmen verbunden ist und der besagte Teil diese Nasenpolsterdrähte umfaßt.

## Revendications

1. Monture de lunettes dont au moins une partie est fabriquée à partir d'un alliage à base de nickel-titane à mémoire de forme, qui se trouve dans l'état métallurgique pseudo-élastique écroui, ayant été soumis à un écrouissage d'au moins environ 30 %, de façon à être élastique vis-à-vis des efforts d'au moins 3 % sur une gamme de température d'usage de la monture de lunettes allant de - 20 °C à + 40 °C.

2. Monture de lunettes selon la revendication 1, dans laquelle la gamme de température pseudo-élastique dudit alliage correspond à la partie supérieure de la gamme de température d'usage.

3. Monture de lunettes selon la revendication 2, dans laquelle ladite partie est fabriquée à partir d'un alliage à base de nickel-titane à mémoire de forme qui a été soumis à un écrouissage d'au moins 40 %.

4. Monture de lunettes selon l'une quelconque des revendications précédentes, dans laquelle ladite monture comprend une paire de branches, ladite partie constituant lesdites branches.

5. Monture de lunettes selon l'une quelconque des revendications précédentes, dans laquelle ladite monture comprend un pont nasal, ladite partie constituant ledit pont.

6. Montures de lunettes selon l'une quelconque des revendications précédentes, dans laquelle ladite monture comprend une paire de cercles récepteurs de verre et une paire de plaquettes nasales, chaque plaquette nasale étant réunie à un cercle respectif par un fil de plaquette nasale, lesdites parties constituant lesdites fils de plaquettes nasales.
